# EUROPEAN PATENT APPLICATION

(11) **EP 4 047 387 A1**
(43) Date of publication of application: **24.08.2022**
(21) Application number: 22157009.6
(22) Date of filing: 16.02.2022
(51) Int. Cl.: G01S 7/481, G01S 7/499

(54) **OPTICAL SENSING SYSTEM**

(30) Priority: 19.02.2021 CN 202110195580
(71) Applicant: Coretronic Corporation, Hsin-Chu 300 (TW)
(72) Inventor: PAN, HAW-WOEI, 300 Hsin-Chu (TW); WENG, YI-HSUANG, 300 Hsin-Chu (TW)
(74) Representative: Ter Meer Steinmeister & Partner

(57) **Abstract**

An optical sensing system for sensing a target object (10) is provided. The optical sensing system includes a light source (110), an optical wave plate (120), a polarizing beam-splitting element (130), a reflecting element (140), and a sensing element (150). The light source provides a first linearly polarized light beam (L1). The optical wave plate is adapted to convert the first linearly polarized light beam into a circularly polarized light beam (C) and convert the circularly polarized light beam into a second linearly polarized light beam. The polarizing beam-splitting element is adapted to allow the first linearly polarized light beam to pass and reflect the second linearly polarized light beam. The reflecting element is adapted to reflect the circularly polarized light beam to the target object and to reflect the circularly polarized light beam from the target object. The sensing element is disposed on a transmission path of the second linearly polarized light beam.

## Description

This application claims the priority benefits of China application serial no. 202110195580.4, filed on February 19, 2021.

### BACKGROUND

### Technical Field

The invention relates to an optical system, and particularly to an optical sensing system.

### Description of Related Art

Light detection and ranging, or Lidar for short, is an optical remote sensing technology that irradiates a beam, usually a pulsed laser, to the target to measure the target's distance along with other parameters. The technology of Lidar is applied in the fields of surveying and mapping, archaeology, geography, geomorphology, seismology, forestry, remote sensing, atmospheric physics, among many others. And this technology is also used in specific applications such as airborne laser mapping, laser height measurement, and Lidar contour drawing.

In the current common architecture, the beam-splitting element is a beam-splitter, which allows 50% of the light beam to pass and reflects the other 50% of the light beam. However, this method does not have an effective use of the emitted light intensity and the received light intensity. While the light intensity is a key parameter that determines the detection range of the Lidar, such method actually shortens the detection range of Lidar.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The invention provides an optical sensing system capable of greatly improving the utilization of the light beam and reducing the loss of the light beam in the system.

Other objectives and advantages of the invention may be further understood from the technical features disclosed in the invention.

The object is solved by the features of the independent claims. Preferred embodiments are given in the dependent claims.

In order to achieve one, part, or all of the above objectives or other objectives, the invention provides an optical sensing system to sense a target object. The optical sensing system includes a light source, an optical wave plate, a polarizing beam-splitting element, and a reflecting element. The light source provides a first linearly polarized light beam. The optical wave plate is disposed on a transmission path of the first linearly polarized light beam, and is adapted to convert the first linearly polarized light beam into a circularly polarized light beam and convert the circularly polarized light beam into a second linearly polarized light beam. The polarizing beam-splitting element is disposed on the transmission path of the first linearly polarized light beam, and is adapted to allow the first linearly polarized light beam to pass and reflect the second linearly polarized light beam. The reflecting element is disposed on a transmission path of the circularly polarized light beam to reflect the circularly polarized light beam to the target object and to reflect the circularly polarized light beam from the target object. The sensing element is disposed on a transmission path of the second linearly polarized light beam.

In one or more embodiments, the light source may be an infrared-light emitting element.

In one or more embodiments, a wavelength range of an infrared light emitted by the light source may be in a range of 905 nm to 1550 nm.

In one or more embodiments, the first linearly polarized light beam transmitted to the polarizing beam-splitting element may be collimated light.

In one or more embodiments, the reflecting element may be microelectromechanical systems for rotating to change an emergent angle of the circularly polarized light beam.

In one or more embodiments, the reflecting element may be a two-dimensional scanning polarizer.

In one or more embodiments, the optical wave plate may be formed on the polarizing beam-splitting element or the reflecting element.

In one or more embodiments, the optical sensing system may further comprise a collimating element.

The collimating element may be disposed on the transmission path of the first linearly polarized light beam.

The collimating element may be located between the light source and the polarizing beam-splitting element.

The collimating element may be adapted to collimate the first linearly polarized light beam.

In one or more embodiments, the optical sensing system may further comprise a filter element.

The filter element may be disposed on the transmission path of the second linearly polarized light beam.

The filter element may be located between the polarizing beam-splitting element and the sensing element.

The filter element may be adapted to allow a light beam within a wavelength range of the second linearly polarized light beam to pass.

In one or more embodiments, the optical sensing system may further comprise a light receiving element.

The light receiving element may be disposed on the transmission path of the second linearly polarized light beam.

The light receiving element may be located between the polarizing beam-splitting element and the sensing element.

The light receiving element may be adapted to allow the second linearly polarized light beam to enter the sensing element.

In one or more embodiments, the circularly polarized light beam before being incident to the target object and the circularly polarized light beam from the target object may have the same transmission path.

Based on the above, the embodiments of the invention have at least one of the following advantages or effects. In the optical sensing system of the invention, the first linearly polarized light beam provided by the light source passes sequentially through the polarizing beam-splitting element and the optical wave plate to be converted into the circularly polarized light beam, and the circularly polarized light beam is transmitted to the reflecting element to be reflected to the target object. The circularly polarized light beam with sensing information reflected by the target object passes through the optical wave plate along the original path to be converted into a second linearly polarized light beam. The second linearly polarized light beam is transmitted toward the polarizing beam-splitting element, and is reflected to the sensing element by the polarizing beam-splitting element to perform sensing. In this way, the utilization of the light beam may be greatly improved, the loss of the light beam in the system may be reduced, and/or the small volume may be maintained.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

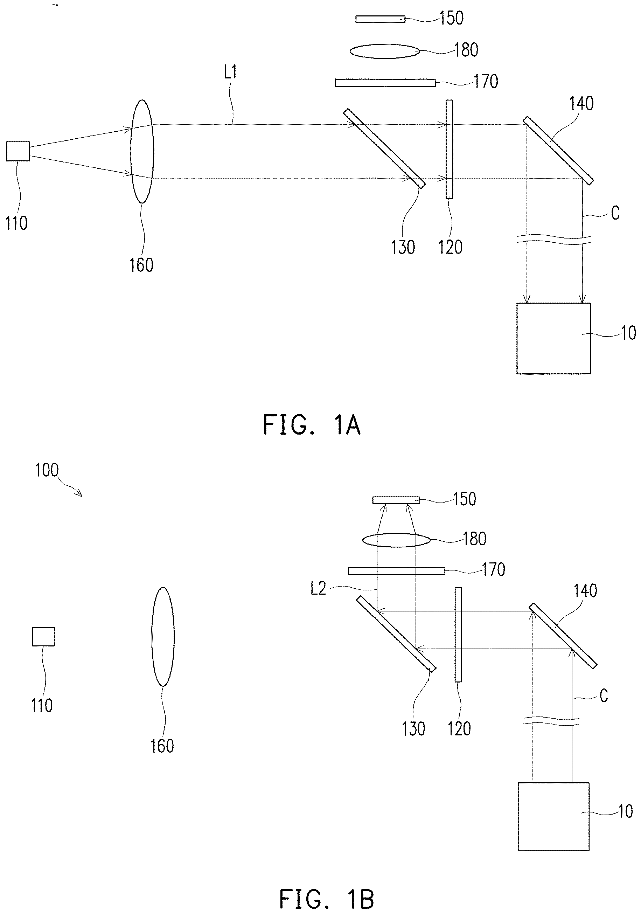

FIG. 1A and FIG. 1B are respectively a schematic diagram of an optical sensing system at different timings according to an embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the FIG.(s) being described. The components of the invention may be positioned in a number of different orientations. As such, the directional terminology is adapted for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A "Component is directly "adjacent to" "B" component or one or more additional components are between "A" component and "B" component. Accordingly, the drawings and descriptions will be regarded as illustrative in nature and not as restrictive.

FIG. 1A and FIG. 1B are respectively a schematic diagram of an optical sensing system at different timings according to an embodiment of the invention. In FIG. 1A and FIG. 1B, an optical sensing system 100 of this embodiment is adapted to sense a target object 10. The optical sensing system 100 is applied to, for example, a Lidar of an electronic device (for example, a smart phone, a tablet, or a computer). The target object 10 may be any tangible object with a surface, but the invention is not limited thereto.

The optical sensing system 100 includes a light source 110, an optical wave plate 120, a polarizing beam-splitting element 130, a reflecting element 140, and a sensing element 150. Specifically, in this embodiment, the optical sensing system 100 further includes a collimating element 160, a filter element 170, and a light receiving element 180.

The light source 110 provides a first linearly polarized light beam L1. In this embodiment, the light source 110 is an infrared-light emitting element. The light source 110 is, for example, a laser diode (LD), which emits infrared light in a wavelength range of 905 nm to 1550 nm, but the invention is not limited thereto. Specifically, the light source 110 of this embodiment provides the first linearly polarized light beam L1 toward the polarizing beam-splitting element 130. For example, the first linearly polarized light beam L1 may be an infrared light beam with P polarization.

The optical wave plate 120 is disposed on a transmission path of the first linearly polarized light beam L1, and is adapted to convert the first linearly polarized light beam L1 into a circularly polarized light beam C and convert the circularly polarized light beam C into a second linearly polarized light beam L2. In this embodiment, the optical wave plate 120 is, for example, a half wave plate, but in other embodiments, the optical wave plate 120 may be a quarter wave plate or a spacer, but the invention is not limited thereto. For example, the circularly polarized light beam C may be an infrared light beam with left-handed polarization or right-handed polarization, and the second linearly polarized light beam L2 may be an infrared light beam with S polarization.

The polarizing beam-splitting element 130 is disposed on the transmission path of the first linearly polarized light beam L1 to allow the first linearly polarized light beam L1 to pass and to reflect the second linearly polarized light beam L2. The polarizing beam-splitting element 130 is configured between the optical wave plate 120 and the light source 110. In this embodiment, the polarizing beam-splitting element 130 is, for example, a polarizing beam-splitter, which is adapted to allow the first linearly polarized light beam L1 with P polarization to pass and to reflect the second linearly polarized light beam L2 with S polarization. In other words, the polarizing beam-splitting element 130 of this embodiment is a polarizing beam-splitter that allows the P-polarized light to pass and reflects the S-polarized light. However, in other embodiments, the first linearly polarized light beam L1 provided by the light source 110 is an infrared light beam with S polarization, and the polarizing beam-splitting element 130 is a polarizing beam-splitter that allows the S polarized light to pass and reflects the P polarized light, but the invention is not limited thereto. In addition, in this embodiment, the first linearly polarized light beam L1 transmitted to the polarizing beam-splitting element 130 is collimated light.

The reflecting element 140 is disposed on a transmission path of the circularly polarized light beam C, and is adapted to reflect the circularly polarized light beam C to the target object 10 and to reflect the circularly polarized light beam C from the target object 10. In this embodiment, the reflecting element 140 is a reflecting device of microelectromechanical Systems (MEMS) for rotating to change the emergent angle of the circularly polarized light beam C. Therefore, in this embodiment, the angle of the reflecting element 140 may be adjusted by the microelectromechanical systems to achieve the effect of large-area scanning. In other embodiments, the reflecting element 140 may also be a two-dimensional scanning polarizer, such as a reflective plate that reflects light beams in two dimensions, but the invention is not limited thereto.

In some embodiments, the optical wave plate 120 may be selectively formed on the polarizing beam-splitting element 130 or the reflecting element 140 in the form of a coating to save the volume of the optical sensing system 100, but the invention is not limited thereto.

The sensing element 150 is disposed on a transmission path of the second linearly polarized light beam L2 to sense a depth signal transmitted by the reflection of the target object 10. The sensing element 150 is, for example, a photosensitive element such as a charge coupled device (CCD) or a complementary metal oxide semiconductor transistor (CMOS), but the invention is not limited thereto.

The collimating element 160 is disposed on the transmission path of the first linearly polarized light beam L1, and is located between the light source 110 and the polarizing beam-splitting element 130, and it is adapted to collimate the first linearly polarized light beam L1, so that the first linearly polarized light beam L1 is transmitted to the polarizing beam-splitting element 130 in a state of collimated light. The collimating element 160 is, for example, composed of at least one lens with diopter, but the invention does not limit the type and form of the collimating element 160.

The filter element 170 is disposed on the transmission path of the second linearly polarized light beam L2, and is located between the polarizing beam-splitting element 130 and the sensing element 150, so as to transmit a light beam within a wavelength range of the second linearly polarized light beam L2. Therefore, light in other bands without the depth signal may be further filtered, thereby improving the sensing effect. However, the invention does not limit the type and form of the filter element 170.

The light receiving element 180 is disposed on the transmission path of the second linearly polarized light beam L2, and is located between the polarizing beam-splitting element 130 and the sensing element 150, so as to allow the second linearly polarized light beam L2 to enter the sensing element 150. Therefore, all the light with the depth signal may be collected into the light-receiving range of the sensing element 150, thereby improving the sensing effect. The light receiving element 180 is, for example, composed of at least one lens with diopter, but the invention does not limit the type and form of light receiving element 180.

Specifically, in the step of providing the light beam in this embodiment, the light source 110 provides the first linearly polarized light beam L1 with P polarization toward the collimating element 160; the first linearly polarized light beam L1 is successively emitted by the light source 110 to be transmitted through the collimating element 160 and the polarizing beam-splitting element 130, and is converted into a circularly polarized light beam C by the optical wave plate 120. The circularly polarized light beam C is transmitted to the target object 10 by the reflection of the reflecting element 140 and two-dimensional scanning to obtain the circularly polarized light beam C with a depth signal, as shown in FIG. 1A.

In addition, in the step of receiving the light beam in this embodiment, the target object 10 reflects the circularly polarized light beam C with the depth signal toward the reflecting element 140, and reflects it by the reflecting element 140 to pass sequentially through the optical wave plate 120 to form the second linearly polarized light beam L2 with S polarization. It is worth mentioning that the transmission path of the circularly polarized light beam C before being incident to the target object 10 is the same as that of the circularly polarized light beam C from the target object 10. The second linearly polarized light beam L2 is reflected by the polarizing beam-splitting element 130 and is transmitted sequentially through the filter element 170 and the light receiving element 180. Finally, the second linearly polarized light beam L2 is transmitted to the sensing element 150 to perform the sensing, as shown in FIG. 1B. In this way, such use of this architecture may greatly improve the utilization of light, reduce the loss of light in the system, and maintain a small volume.

In summary, in the optical sensing system of the invention, the first linearly polarized light beam provided by the light source passes sequentially through the polarizing beam-splitting element and the optical wave plate to be converted into a circularly polarized light beam, and the circularly polarized light beam is transmitted to the reflecting element to be reflected to the target object. The circularly polarized light beam with the sensing information reflected by the target object is transmitted through the optical wave plate along the original path to be converted into a second linearly polarized light beam. The second linearly polarized light beam is transmitted toward the polarizing beam-splitting element, and is reflected to the sensing element by the polarizing beam-splitting element to perform the sensing. In this way, the utilization of light may be greatly improved, the loss of light in the system may be reduced, and the volume may be maintained.

The foregoing description of the preferred of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the present disclosure is intended to be dedicated to the public regardless of whether the element or component is explicitly recited in the following claims.

## Claims

1. An optical sensing system (100), adapted to sense a target object (10), the optical sensing system (100) comprising a light source (110), an optical wave plate (120), a polarizing beam-splitting element (130), a reflecting element (140), and a sensing element (150), wherein:
the light source (110) provides a first linearly polarized light beam (L1);
the optical wave plate (120) is disposed on a transmission path of the first linearly polarized light beam (LI), and is adapted to convert the first linearly polarized light beam (L1) into a circularly polarized light beam (C) and convert the circularly polarized light beam (C) into a second linearly polarized light beam (L2);
the polarizing beam-splitting element (130) is disposed on the transmission path of the first linearly polarized light beam (L1), and is adapted to allow the first linearly polarized light beam (L1) to pass and reflect the second linearly polarized light beam (L2);
the reflecting element (140) is disposed on a transmission path of the circularly polarized light beam (C), and is adapted to reflect the circularly polarized light beam (C) to the target object (10), and to reflect the circularly polarized light beam (C) from the target object (10); and
the sensing element (150) is disposed on a transmission path of the second linearly polarized light beam (L2).

2. The optical sensing system (100) according to claim 1, wherein the light source (110) is an infrared-light emitting element.

3. The optical sensing system (100) according to claim 1 or 2, wherein a wavelength range of an infrared light emitted by the light source (110) is in a range of 905 nm to 1550 nm.

4. The optical sensing system (100) according to any one of the preceding claims, wherein the first linearly polarized light beam (L1) transmitted to the polarizing beam-splitting element (130) is collimated light.

5. The optical sensing system (100) according to any one of the preceding claims, wherein the reflecting element (140) is a microelectromechanical system (MEMS) configured to rotate to change an emergent angle of the circularly polarized light beam (C).

6. The optical sensing system (100) according to any one of the preceding claims, wherein the reflecting element (140) is a two-dimensional scanning polarizer.

7. The optical sensing system (100) according to any one of the preceding claims, wherein the optical wave plate (120) is formed on the polarizing beam-splitting element (130) or the reflecting element (140).

8. The optical sensing system (100) according to any one of the preceding claims, further comprising a collimating element (160) disposed on the transmission path of the first linearly polarized light beam (L1).

9. The optical sensing system (100) according to claim 8, wherein the collimating element (160) is located between the light source (110) and the polarizing beam-splitting element (130), and/or is adapted to collimate the first linearly polarized light beam (L1).

10. The optical sensing system (100) according to any one of the preceding claims, further comprising a filter element (170) disposed on the transmission path of the second linearly polarized light beam (L2).

11. The optical sensing system (100) according to claim 10, wherein the filter element (170) is located between the polarizing beam-splitting element (130) and the sensing element (150), and/or is adapted to allow a light beam within a wavelength range of the second linearly polarized light beam to pass.

12. The optical sensing system (100) according to any one of the preceding claims, further comprising a light receiving element (180) disposed on the transmission path of the second linearly polarized light beam (L2).

13. The optical sensing system (100) according to claim 12, wherein the light receiving element (180) is located between the polarizing beam-splitting element (130) and the sensing element (150), and/or is adapted to allow the second linearly polarized light beam (L2) to enter the sensing element (150).

14. The optical sensing system (100) according to any one of the preceding claims, wherein the circularly polarized light beam (C) before being incident to the target object (10) and the circularly polarized light beam (C) from the target object (10) have the same transmission path.
